# EUROPÄISCHE PATENTSCHRIFT

(11) **EP 3 350 487 B1**
(45) Veröffentlichungstag und Bekanntmachung des Hinweises auf die Patenterteilung: **11.08.2021**
(21) Anmeldenummer: 16763776.8
(22) Anmeldetag: 08.09.2016
(51) Int. Cl.: F16J 15/00, F16J 15/34

(54) **WELLENDICHTUNGSSYSTEM UND PUMPENANORDNUNG MIT EINEM DERARTIGEN WELLENDICHTUNGSSYSTEM**
SHAFT SEAL SYSTEM AND PUMP ARRANGEMENT WITH SUCH A SHAFT SEAL SYSTEM
SYSTÈME D'ÉTANCHÉITÉ D'ARBRE ET ENSEMBLE POMPE COMPORTANT UN SYSTÈME D'ÉTANCHÉITÉ D'ARBRE DE CE TYPE

(30) Priorität: 17.09.2015 DE 102015217827
(43) Veröffentlichungstag der Anmeldung: 25.07.2018
(73) Patentinhaber: KSB SE & Co. KGaA, 67227 Frankenthal (DE)
(72) Erfinder: URBAN, Lutz, 67227 Frankenthal (DE)
(86) Internationale Anmeldenummer: PCT/EP2016/071207
(87) Internationale Veröffentlichungsnummer: WO 2017/045997

(56) Entgegenhaltungen:
- EP-A1- 1 437 511
- US-A- 4 174 672
- US-A- 4 380 416
- US-B1- 6 343 794

## Beschreibung

Die Erfindung betrifft ein Wellendichtungssystem zum Schutz eines mit einem Schmiermittel versehenen Wälzlagers mit einem eine Ausnehmung aufweisenden Dichtungsträger, wobei sich eine Welle durch die Ausnehmung erstreckt, einer auf einer sich um eine Mittellängsachse drehenden Welle angeordneten Wellenschutzhülse, und einem in dem Dichtungsträger platzierten Wellendichtring, der mit dem Dichtungsträger und der Wellenschutzhülse zusammenwirkt. Darüber hinaus betrifft die Erfindung eine Pumpenanordnung mit einem derartigen Wellendichtungssystem.

Aus der US 4,380,416 A ist eine Kreiselpumpe für einen Kühlkreislauf in Automobilen bekannt, die eine Gleitringdichtungsanordnung aufweist. Die Gleitringdichtungsanordnung weist zwei Gleitringelemente und eine aus einem elastomeren Material bestehende, auf der Pumpenwelle befestigten Hülse auf. An der dem Laufrad gegenüberliegenden Seite weist die Hülse eine Dichtlippe auf, die an einer Wellendichtung in Form einer Metallscheibe reibt.

In der US 4,174,672 A wird eine Wellendichtung für die Schraubenwelle in dem Hecktunnel eines Schiffes beschrieben, die zwei in Axialrichtung versetzt angeordnete Dichtpackungen aufnimmt, und durch eine zwischen den Dichtpackungen angeordnete und mit einem Auslass versehene Leerkammer, deren Radialerstreckung von einer massiven Innenwandung des Gehäuseaufbaus begrenzt ist.

Die US 6,343,794 B1 beschreibt eine Schmiermitteldichtung ohne Verschleißflächen mit einem Labyrinthelement, einem Trennblech und einer Schleuderscheibe.

EP 1437511 A1 offenbart ein Wellendichtungssystem gemäß dem Oberbegriff des Anspruchs 1.

Aufgabe der Erfindung ist es, aufzuzeigen, wie ein Wellendichtungssystem ausgestaltet werden kann, sodass es leicht ein- und ausgebaut werden kann und dass das im Wälzlager eingesetzte Schmiermittel nicht durch ein synthetisches Wärmeträgerfluid aufgelöst wird.

Zur Lösung der Aufgabe weist das Wellendichtungssystem eine an der Wellenschutzhülse angeordnete Schleuderscheibe sowie eine aus einem mit der Welle drehenden Gleitring und einem feststehenden, mit dem Gleitring zusammenwirkenden Gegenring gebildete Gleitringdichtung auf, wobei Wellendichtring, Wellenschutzhülse mit Schleuderscheibe und wenigstens eines der beiden die Gleitringdichtung bildenden Ringelemente in der Ausnehmung des Dichtungsträgers angeordnet sind.

Die Ausnehmung des Dichtungsträgers weist mehrere Abschnitte mit jeweils unterschiedlichen Innendurchmessern auf, wodurch die einzelnen Teile des Wellendichtungssystems einfach und richtig an ihrem Platz anordenbar sind.

Um zu gewährleisten, dass beim Einsatz genormter Wellendichtringe die Wellenschutzhülse einen möglichst geringen Außendurchmesser aufweist, ist der Wellendichtring in einem den größten Innendurchmesser aufweisenden ersten Abschnitt des Dichtungsträgers platziert.

Um einen Abfluss des synthetischen Wärmeträgerfluides vor dem Erreichen des Wälzlagers zu ermöglichen, ist im zweiten Abschnitt wenigstens eine Radialbohrung vorgesehen, die sich von der Ausnehmung zur Außenmantelfläche des Dichtungsträgers erstreckt.

Des Weiteren ist die Schleuderscheibe im zweiten Abschnitt des Dichtungsträgers angeordnet.

Als besonders vorteilhaft für den Abfluss des Wärmeträgerfluides aus dem Dichtungsträger hat sich weiterhin erwiesen, wenn die Schleuderscheibe in axialer Richtung so angeordnet ist, dass sie innerhalb des zweiten Abschnitts mittig oder nahezu mittig zur Radialbohrung ausgerichtet ist.

Bei einer vorteilhaften Ausgestaltung des Wellendichtungssystems liegt das Verhältnis von Innendurchmesser des zweiten Abschnitts des Dichtungsträgers zu Außendurchmesser der Schleuderscheibe in einem Bereich von etwa 1,15 bis etwa 1,25.

Als besonders vorteilhaft hat sich herausgestellt, wenn das Verhältnis von Innendurchmesser des zweiten Abschnitts des Dichtungsträgers zu Außendurchmesser der Schleuderscheibe in einem Bereich von etwa 1,2 bis etwa 1,24 liegt.

Für eine richtige Montage ist es vorteilhaft, wenn der Dichtungsträger wenigstens ein Mittel für eine mechanische Kodierung zur eindeutigen Ausrichtung bzw. Positionierung des Dichtungsträgers aufweist. Dabei kann dieses wenigstens eine Mittel als Vertiefung oder als Vorsprung ausgebildet sein, das mit einem komplementär ausgebildeten Mittel zusammenwirkt, das in einem Gehäuseteil, in dem das Wellendichtungssystem untergebracht ist, ausgebildet ist.

Erfindungsgemäß ist vorgesehen, das Wellendichtungssystem in einer Pumpenanordnung mit einem mit Schmiermittel versehenen Wälzlager einzusetzen.

Weitere Vorteile und Merkmale ergeben sich aus der Beschreibung eines Ausführungsbeispiels anhand von Zeichnungen und aus den Zeichnungen selbst.

Dabei zeigt
- Fig. 1: in einer Pumpenanordnung eingebautes erfindungsgemäßes Wellendichtungssystem,
- Fig. 2: eine vergrößerte Darstellung des Wellendichtungssystems gemäß Fig. 1 und
- Fig. 3: eine detaillierte Darstellung des Dichtungsträgers des Wellendichtungssystems aus Fig. 2.

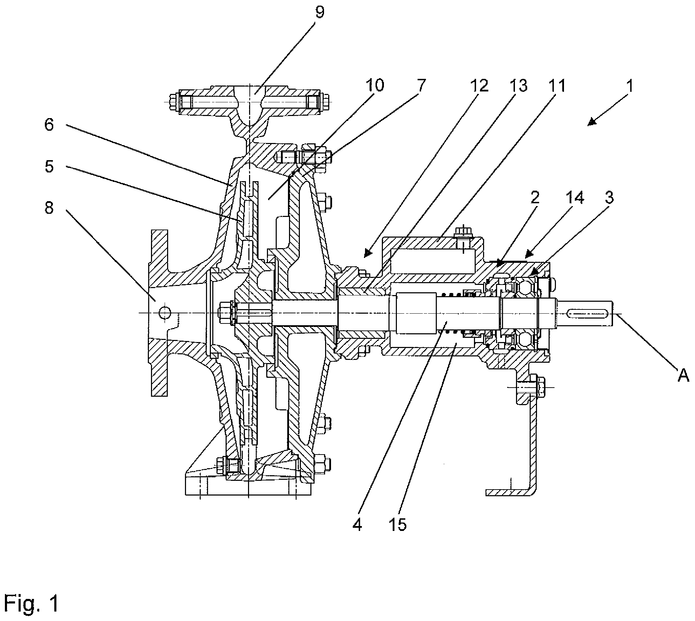

Figur 1 zeigt ein in einer Pumpenanordnung 1 eingebautes Wellendichtungssystem 2 zum Schutz eines Wälzlagers 3 vor kriechfreudigen Fördermedien. Im Ausführungsbeispiel handelt es sich bei der Pumpenanordnung 1, um eine einstufige Kreiselpumpe mit einer Welle 4. Die Welle 4 weist eine sich in axialer Richtung erstreckende Mittellängsachse A auf und trägt an einem Ende ein Laufrad 5. Das Laufrad 5 ist von einem Hydraulikgehäuse 6 mit einem Gehäusedeckel 7 umgeben. Das Hydraulikgehäuse 6 weist eine Einlassöffnung 8 zum Ansaugen eines Fördermediums und eine Auslassöffnung 9 zum Ausstoßen des Fördermediums auf. Der Gehäusedeckel 7 ist an der der Einlassöffnung 8 gegenüberliegende Seite des Hydraulikgehäuses 6 angeordnet.

Die Welle 4 erstreckt sich von einer durch Hydraulikgehäuse 6 und Gehäusedeckel 7 begrenzten Strömungskammer 10 durch den Gehäusedeckel 7 sowie durch ein Lagerträgergehäuse 11, welches an dem Gehäusedeckel 7 befestigt ist. Das Lagerträgergehäuse 11 weist nahe dem Gehäusedeckel 7 einen ersten Lageraufnahmebereich 12 auf, an dem eine Gleitlageranordnung 13 angeordnet ist. An einem zweiten, dem Gehäusedeckel 7 fernen Lageraufnahmebereich 14 ist das Wellendichtungssystem 2 und das Wälzlager 3 angeordnet. Lagerträgergehäuse 11 sowie Gleitlageranordnung 13 und Wellendichtungssystem 2 mit Wälzlager 3 definieren eine Kammer 15

Das dem Laufrad 5 gegenüberliegende Ende der Welle 4 ist aus dem Lagerträgergehäuse 10 herausgeführt und an einer Abtriebswelle eines nicht dargestellten Motors, insbesondere eines Elektromotors, angeschlossen.

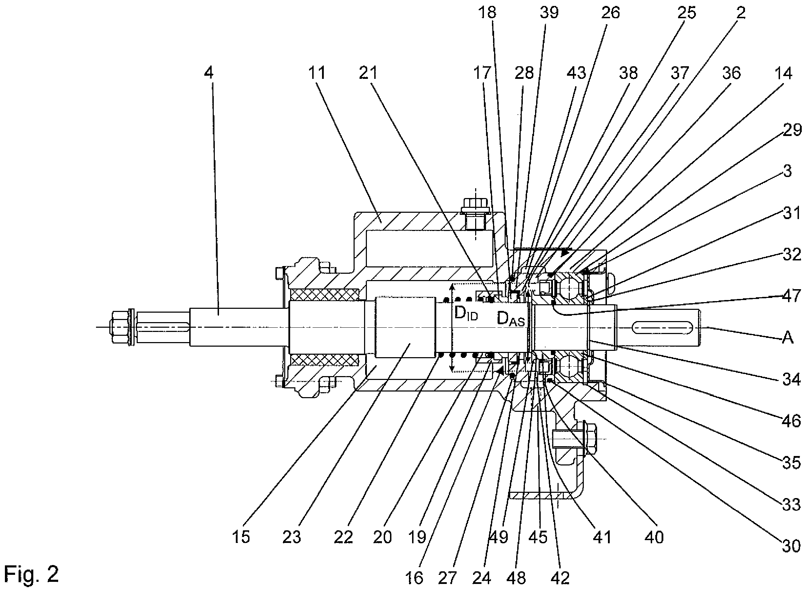

Die Fig. 2 zeigt eine detaillierte Darstellung des Lagerträgergehäuses 11 mit dem erfindungsgemäßen Wellendichtungssystem 2. Die Abdichtung der Kammer 15 in Richtung Wälzlager 3 übernimmt eine Gleitringdichtung 16. Die Gleitringdichtung 16 wird aus zwei Ringelementen gebildet, wobei ein Ringelement ein mit der Welle 4 drehender Gleitring 17 und das andere Ringelement ein feststehender, mit dem Gleitring 17 zusammenwirkender Gegenring 18 ist. Gleitring 17 und Gegenring 18 sind direkt auf der Welle 4 aufgeschoben angeordnet. Bei der gezeigten beispielhaften Ausführungsform der Gleitringdichtung 16 ist auf den Gleitring 17 eine Hülse 19 aufgeschoben, wobei sich ein Bereich mit vergrößertem Außendurchmesser am Gleitring 17 und ein Bereich mit vergrößertem Innendurchmesser an der Hülse 19 überdecken. Die sich durch die unterschiedlichen Innendurchmesser in der Hülse 19 ergebende Schulter dient als Anschlagsfläche und liegt an der dem Gegenring 18 gegenüberliegenden Stirnseite des Gleitrings 17 an.

Der Innendurchmesser des Bereichs verkleinerten Innendurchmessers der Hülse 19 ist größer als der Durchmesser der Welle 4, sodass ein Ringspalt 20 entsteht, in dem ein Dichtungsring 21 angeordnet ist. Der Dichtungsring 21 liegt an der dem Gegenring 18 gegenüberliegenden Stirnseite des Gleitrings 17 an. Außerdem ist in dem Ringspalt 20 ein Federelement 22 angeordnet, welches an dem Dichtungsring 21 anliegt und sich in Axialrichtung bis zu einer Verdickung 23 an der Welle 4 erstreckt und an einer durch die Verdickung 23 gebildeten Schulter anliegt. Mittels des Federelements 22 wird der Gleitring 17 gegen den Gegenring 18 gedrückt.

Der Gegenring 18 ist mittels einer topfartigen Manschettendichtung 24 elastisch in einer Ausnehmung 25 eines Dichtungsträgers 26 angeordnet, wobei sich die Welle 4 durch die Ausnehmung 25 erstreckt. Der Dichtungsträger 26 ist im zweiten Lageraufnahmebereich 14 angeordnet und stützt sich in axialer Richtung mit einer Stirnseite an einem sich zur Welle 4 hin erstreckenden Vorsprung 27 ab. Ein Dichtungsring 28 dichtet den Spalt zwischen Dichtungsträger 26 und Lagerträgergehäuse 11 ab. Mit der gegenüberliegenden Stirnseite liegt der Dichtungsträger 26 an einem Außenring 29 des Wälzlager 3 an. Mittels eines weiteren Dichtungsringes 30 wird der Spalt zwischen Dichtungsträger 26 und Lagerträgergehäuse 11 abgedichtet. Bei dem vorliegenden Ausführungsbeispiel ist das Wälzlager 3 als Rillenkugellager ausgebildet. Alternativ können auch andere Lager vorgesehen sein. Dichtungsträger 26 und Wälzlager 3 werden mittels eines ersten Sicherungsringes 31 und eines zweiten Sicherungsringes 32 an ihrem Platz gehalten. Der erste Sicherungsring 31 ist in einer im Lageraufnahmebereich 14 ausgebildeten Ringnut 33 und der zweite Sicherungsring 32 in einer in der Welle 4 ausgebildeten Ringnut 34 angeordnet. Auf der dem Wälzlager 3 abgewandten Seite der Sicherungsringe 31 und 32 ist ein Deckel 35 vorgesehen, der das Wälzlager 3 vor Schmutz in der Außenumgebung bewahrt.

Die Ausnehmung 25 des Dichtungsträgers 26 weist im Wesentlichen vier sich in axialer Richtung erstreckende Abschnitte 36, 37, 38 und 39 mit jeweils unterschiedlichen Innendurchmessern auf. Der dem Wälzlager 3 am nächsten liegende erste Abschnitt 36 weist den größten Innendurchmesser auf. Im ersten Abschnitt 36 des Dichtungsträgers 26 ist ein Wellendichtring 40 platziert. Der Wellendichtring 40 wirkt mit dem Dichtungsträger 26 und einer auf der Welle 4 drehfest angeordneten Wellenschutzhülse 41 zusammen, die sich innerhalb der Ausnehmung 25 von dem ersten Abschnitt 36 in den zweiten Abschnitt 35 erstreckt. Der in axialer Richtung an den Abschnitt 36 angrenzende Abschnitt 37 weist einen kleineren Innendurchmesser auf als der Abschnitt 36. Im Abschnitt 37 ist wenigstens eine Radialbohrung 42 vorgesehen, die sich von der Ausnehmung 25 zur Außenmantelfläche des Dichtungsträgers 26 erstreckt und in eine im zweiten Lageraufnahmebereich 14 des Lagerträgergehäuses 11 ausgebildete Ringnut 43 mündet.

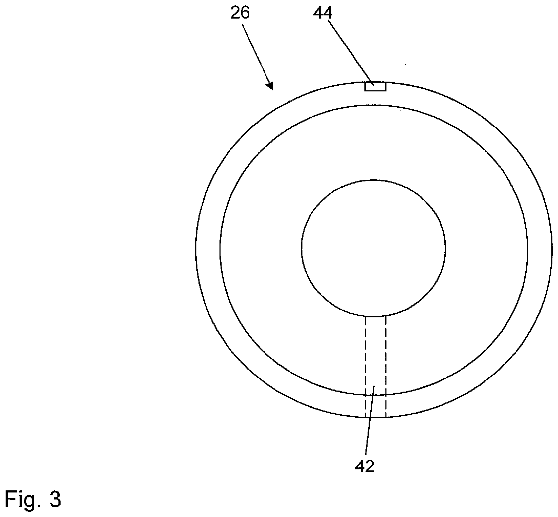

Damit die wenigstens eine Radialbohrung 42 so ausgerichtet ist, dass sie sich senkrecht nach unten erstreckt, kann der Dichtungsträger 26 wenigstens ein Mittel aufweisen, die für eine mechanische Kodierung zur eindeutigen Ausrichtung bzw. Positionierung des Dichtungsträgers 26, insbesondere bei der Montage, mit einem komplementär ausgebildeten Mittel im Lageraufnahmebereich 14 zusammenwirkt. Im Lageraufnahmebereich 14 kann beispielsweise ein zur Mittellängsachse A weisender, nicht gezeigter Vorsprung vorgesehen sein, der in eine in Fig. 3 dargestellte Vertiefung 44 im Dichtungsträger 26 eingreift. Alternativ kann der Dichtungsträger 26 beispielsweise einen sich von der Mittellängsachse A weg erstreckenden Vorsprung aufweisen, der mit einer im Lageraufnahmebereich 14 vorgesehenen Vertiefung zusammenwirkt. Wird auf eine mechanische Kodierung verzichtet, bietet es sich an, eine Vielzahl von Radialbohrungen 42 vorzusehen. Bevorzugt ist dabei eine Anzahl von vier bis acht Radialbohrungen 42. Bedarfsweise können mehrere Radialbohrungen 42 und wenigstens ein Mittel 44 im bzw. am Dichtungsträger 26 vorgesehen sein.

Wie der Fig. 2 zu entnehmen ist, führt wiederum eine Bohrung 45 durch das Lagerträgergehäuse 11 aus der Ringnut 43 zur Außenumgebung. Die Bohrung 45 ist dabei so ausgebildet, dass sie nahe am tiefsten Punkt der Ringnut 43 aus dieser herausführt.

Der sich in axialer Richtung an den zweiten Abschnitt 37 anschließende dritte Abschnitt 38 weist wiederum einen kleineren Innendurchmesser auf als der Abschnitt 37 und bildet in axialer Richtung eine Anlage für die im Bereich des vierten Abschnitts 39 platzierte Manschettendichtung 24, wobei der Abschnitt 39 einen größeren Innendurchmesser als der Abschnitt 38, jedoch einen kleineren Innendurchmesser als der Abschnitt 37 aufweist.

Die Wellenschutzhülse 41 liegt an einem Innenring 46 des Wälzlager 3 an, wobei die dem Wälzlager 3 zugewandte Stirnseite eine Rücknehmung zur Aufnahme eines Dichtungsringes 47 aufweist. Der Dichtungsring 47 dichtet einerseits die Spalte zwischen Welle 4 und Wellenschutzhülse 41 bzw. Wälzlager 3 ab, andererseits spannt er die Wellenschutzhülse 41 gegen eine in der Welle 4 ausgebildeten Anlageschulter 48 vor. Die Wellenschutzhülse 41 weist an der dem Wälzlager 3 gegenüberliegenden Ende eine Schleuderscheibe 49 auf, die bei der gezeigten Ausführungsform einstückig mit der Wellenschutzhülse 41 ausgebildet ist. Die Schleuderscheibe 49 ist in dem zweiten Abschnitt 37 des Dichtungsträgers 26 angeordnet. Vorteilhafterweise ist die Schleuderscheibe 49 in axialer Richtung so angeordnet, dass sie innerhalb des Abschnitts 37 nahezu mittig zur Radialbohrung 42 ausgerichtet ist. Der Bereich der Wellenschutzhülse 41, an dem der Wellendichtring 40 anliegt, weist bei Bedarf eine gehärtete Oberfläche auf. Das Verhältnis von Innendurchmesser D_{ID} in Abschnitt 37 des Dichtungsträgers 26 zu Außendurchmesser D_{AS} der Schleuderscheibe 48 liegt in einem Bereich von etwa 1,15 bis etwa 1,25 und vorzugsweise in einem Bereich von etwa 1,20 bis etwa 1,24.

Da sich während des Betriebs das kriechfreudige Fördermedium in der Kammer 15 des Lagerträgergehäuses 11 befindet, kann es den Gegenring 18 unterwandern und in die Ausnehmung 25 des Dichtungsträgers 26 und somit an die Wellenschutzhülse 41 gelangen. Durch die sich mit der Welle 4 drehende Wellenschutzhülse 41 und der Schleuderscheibe 49 wird das Medium radial weggeschleudert und läuft an der Innenseite des Dichtungsträgers 26 herunter bis zur Radialbohrung 42. Das Medium fließt dann in die Ringnut 43 und anschließend in die im Nutgrund der Ringnut 43 ausgebildete Bohrung 45. Von dort kann sie einer nicht gezeigten Auffangvorrichtung zugeführt werden. Beim Einsatz mehrerer Radialbohrungen 42 im Dichtungsträger 26, wobei beispielsweise wenigstens eine der Radialbohrungen 42 unter einer gedachten mit der Mittellängsachse A zusammenfallenden horizontalen Ebene in die Ausnehmung 25 münden kann, ist es zudem möglich, dass das Fördermedium durch die Radialbohrungen 42 geschleudert wird und am Nutgrund der Ringnut 43 bis zu Bohrung 45 läuft.

## Patentansprüche

1. Wellendichtungssystem (2) zum Schutz eines mit einem Schmiermittel versehenen Wälzlagers (3), mit
einem eine Ausnehmung (25) aufweisenden Dichtungsträger (26), wobei sich eine Welle (4) durch die Ausnehmung (25) erstreckt,
einer auf einer sich um eine Mittellängsachse (A) drehenden Welle (4) angeordneten Wellenschutzhülse (41),
einem in dem Dichtungsträger (26) platzierten Wellendichtring (40), der mit dem Dichtungsträger (26) und der Wellenschutzhülse (41) zusammenwirkt,
eine aus einem mit der Welle (4) drehenden Gleitring (17) und einem feststehenden, mit dem Gleitring (17) zusammenwirkenden Gegenring (18) gebildete Gleitringdichtung (16), wobei Wellendichtring (40), Wellenschutzhülse (41) mit wenigstens einer der beiden die Gleitringdichtung (16) bildenden Ringelemente (17, 18) in der Ausnehmung (25) des Dichtungsträgers (26) angeordnet sind,
**dadurch gekennzeichnet, dass** das Wellendichtungssystem weiterhin eine an der Wellenschutzhülse (41) angeordnete Schleuderscheibe (49) umfasst, die in der Ausnehmung (25) des Dichtungsträgers (26) angeordnet ist, dass die Ausnehmung (25) des Dichtungsträgers (26) mehrere Abschnitte (36, 37, 38, 39) mit jeweils unterschiedlichen Innendurchmessern aufweist, dass in einem zweiten Abschnitt (37) wenigstens eine Radialbohrung (41) vorgesehen ist, die sich von der Ausnehmung (25) zur Außenmantelfläche des Dichtungsträgers (26) erstreckt, und dass die Schleuderscheibe (49) in axialer Richtung so angeordnet ist, dass sie innerhalb des zweiten Abschnitts (37) mittig oder nahezu mittig zur Radialbohrung (42) ausgerichtet ist.

2. Wellendichtungssystem nach Anspruch 1, **dadurch gekennzeichnet, dass** der Wellendichtring (40) in einem den größten Innendurchmesser aufweisenden ersten Abschnitt (36) des Dichtungsträgers (26) platziert ist.

3. Wellendichtungssystem nach einem der Ansprüche 1 oder 2, **dadurch gekennzeichnet, dass** das Verhältnis von Innendurchmesser (D_{ID}) des zweiten Abschnitts (37) des Dichtungsträgers (26) zu Außendurchmesser (D_{AS}) der Schleuderscheibe (49) in einem Bereich von etwa 1,15 bis etwa 1,25 liegt.

4. Wellendichtungssystem nach einem der Ansprüche 1 bis 3, **dadurch gekennzeichnet, dass** das Verhältnis von Innendurchmesser (D_{ID}) des zweiten Abschnitts (37) des Dichtungsträgers (26) zu Außendurchmesser (D_{AS}) der Schleuderscheibe (49) in einem Bereich von etwa 1,2 bis etwa 1,24 liegt.

5. Wellendichtungssystem nach einem der Ansprüche 1 bis 4, **dadurch gekennzeichnet, dass** der Dichtungsträger (26) wenigstens ein Mittel (44) für eine mechanische Kodierung zur eindeutigen Ausrichtung bzw. Positionierung des Dichtungsträgers (26) aufweist.

6. Pumpenanordnung zum Fördern eines synthetischen Wärmeträgerfluides mit inem Wälzlager (3), **gekennzeichnet durch** ein Wellendichtungssystem (2) nach einem der Ansprüche 1 bis 5.

## Claims

1. Shaft seal system (2) for protecting a rolling bearing (3) provided with a lubricant, comprising a seal carrier (26) having a recess (25), wherein a shaft (4) extends through the recess (25),
a shaft protection sleeve (41) arranged on a shaft (4) rotating about a central longitudinal axis (A), a shaft sealing ring (40) which is placed in the seal carrier (26) and interacts with the seal carrier (26) and the shaft protection sleeve (41), a face seal (16) formed from a face seal ring (17) rotating with the shaft (4), and a fixed counterring (18) interacting with the face seal ring (17), wherein the shaft sealing ring (40) and the shaft protection sleeve (41) with at least one of the two ring elements (17, 18) forming the face seal (16) are arranged in the recess (25) of the seal carrier (26),
**characterized in that** the shaft seal system furthermore comprises a centrifugal disc (49) which is arranged on the shaft protection sleeve (41) and arranged in the recess (25) of the seal carrier (26) ; **in that** the recess (25) of the seal carrier (26) has a plurality of portions (36, 37, 38, 39) having in each case different internal diameters **in that** at least one radial bore (41), which extends from the recess (25) to the external circumferential surface of the seal carrier (26), is provided in a second portion (37); and **in that** the centrifugal disc (49) in the axial direction is arranged such that said centrifugal disc (49) within the second portion (37) is aligned so as to be centric or almost centric in relation to the radial bore (42).

2. Shaft seal system according to Claim 1, **characterized in that** the shaft sealing ring (40) is placed in a first portion (36) of the seal carrier (26) that has the largest internal diameter.

3. Shaft seal system according to one of Claims 1 or 2, **characterized in that** the ratio of the internal diameter (D_{ID}) of the second portion (37) of the seal carrier (26) to the outside diameter (D_{AS}) of the centrifugal disc (49) lies in a range from approximately 1.15 to approximately 1.25.

4. Shaft seal system according to one of Claims 1 to 3, **characterized in that** the ratio of the internal diameter (D_{ID}) of the second portion (37) of the seal carrier (26) to the outside diameter (D_{AS}) of the centrifugal disc (49) lies in a range from approximately 1.2 to approximately 1.24.

5. Shaft seal system according to one of Claims 1 to 4, **characterized in that** the seal carrier (26) comprises at least one means (44) of mechanical coding for unambiguous orientation and positioning of the seal carrier (26).

6. Pump arrangement for pumping a synthetic heat transfer fluid, having a rolling bearing (3), **characterized by** a shaft seal system (2) according to one of Claims 1 to 5.

## Revendications

1. Système d'étanchéité d'arbre (2) pour la protection d'un roulement (3) pourvu d'un lubrifiant, comprenant
un support de garniture d'étanchéité (26) présentant un évidement (25), un arbre (4) s'étendant à travers l'évidement (25),
un manchon de protection d'arbre (41) agencé sur un arbre (4) qui tourne autour d'un axe longitudinal médian (A),
une bague d'étanchéité d'arbre (40) placée dans le support de garniture d'étanchéité (26), qui coopère avec le support de garniture d'étanchéité (26) et le manchon de protection d'arbre (41),
une garniture d'étanchéité à bague de glissement (16) formée par une bague de glissement (17) qui tourne avec l'arbre (4) et une contre-bague (18) fixe qui coopère avec la bague de glissement (17), la bague d'étanchéité d'arbre (40) et le manchon de protection d'arbre (41) doté d'au moins un des deux éléments bague (17, 18) qui forment la garniture d'étanchéité à bague de glissement (16) étant agencés dans l'évidement (25) du support de garniture d'étanchéité (26),
**caractérisé en ce que** le système d'étanchéité d'arbre comporte en outre un disque déflecteur (49) agencé sur le manchon de protection d'arbre (41), qui est agencé dans l'évidement (25) du support de garniture d'étanchéité (26), **en ce que** l'évidement (25) du support de garniture d'étanchéité (26) comprend plusieurs sections (36, 37, 38, 39) ayant chacune des diamètres intérieurs différents, **en ce qu'**au moins un alésage radial (41) est prévu dans une deuxième section (37), qui s'étend depuis l'évidement (25) jusqu'à la surface d'enveloppe extérieure du support de garniture d'étanchéité (26), et **en ce que** le disque déflecteur (49) est agencé dans la direction axiale de telle sorte qu'il soit orienté au sein de la deuxième section (37) au milieu ou pratiquement au milieu de l'alésage radial (42) .

2. Système d'étanchéité d'arbre selon la revendication 1, **caractérisé en ce que** la bague d'étanchéité d'arbre (40) est placée dans une première section (36), présentant le plus grand diamètre intérieur, du support de garniture d'étanchéité (26).

3. Système d'étanchéité d'arbre selon l'une quelconque des revendications 1 ou 2, **caractérisé en ce que** le rapport entre le diamètre intérieur (D_{ID}) de la deuxième section (37) du support de garniture d'étanchéité (26) et le diamètre extérieur (D_{AS}) du disque déflecteur (49) se situe dans une plage allant d'environ 1,15 à environ 1,25.

4. Système d'étanchéité d'arbre selon l'une quelconque des revendications 1 à 3, **caractérisé en ce que** le rapport entre le diamètre intérieur (D_{ID}) de la deuxième section (37) du support de garniture d'étanchéité (26) et le diamètre extérieur (D_{AS}) du disque déflecteur (49) se situe dans une plage allant d'environ 1,2 à environ 1,24.

5. Système d'étanchéité d'arbre selon l'une quelconque des revendications 1 à 4, **caractérisé en ce que** le support de garniture d'étanchéité (26) comprend au moins un moyen (44) pour un codage mécanique pour l'alignement ou le positionnement précis du support de garniture d'étanchéité (26).

6. Agencement de pompe pour le transport d'un fluide caloporteur synthétique muni d'un roulement (3), **caractérisé par** un système d'étanchéité d'arbre (2) selon l'une quelconque des revendications 1 à 5.
